Europäisches Patentamt

European Patent Office

Office européen des brevets

(11) Veröffentlichungsnummer: **0 289 607 B1**

(12) # EUROPÄISCHE PATENTSCHRIFT

(45) Veröffentlichungstag der Patentschrift:
03.04.91 Patentblatt 91/14

(51) Int. Cl.$^5$: **B65B 1/14**

(21) Anmeldenummer: 87906041.6

(22) Anmeldetag: 25.08.87

(86) Internationale Anmeldenummer:
PCT/SU87/00087

(87) Internationale Veröffentlichungsnummer:
WO 88/01590 10.03.88 Gazette 88/06

(54) **DOSIERVORRICHTUNG VON MASSENGUT.**

(30) Priorität: 29.08.86 SU 4154081

(43) Veröffentlichungstag der Anmeldung:
09.11.88 Patentblatt 88/45

(45) Bekanntmachung des Hinweises auf die
Patenterteilung:
03.04.91 Patentblatt 91/14

(84) Benannte Vertragsstaaten:
DE FR GB IT SE

(56) Entgegenhaltungen:
DE-A- 2 461 696
FR-A- 1 489 157
SU-A- 560 804
SU-A- 990 600
US-A- 3 193 155
S.P. Orlov "Dosiereinrichtungen", 1960,
MASHGIZ (Moskau), s. S. 110, fig. 69

(73) Patentinhaber: INSTITUT GORNOGO DELA
SIBIRSKOGO OTDELENIA AKADEMII NAUK
SSSR
Krasny pr., 54
Novosibirsk, 630091 (SU)

(72) Erfinder: STAZHEVSKY, Stanislav Borisovich
ul. Derzhavina, 19-39
Novosibirsk, 630091 (SU)
Erfinder: SHEMYAKIN, Evgeny Ivanovich
ul. Zolotodolinskaya, 8
Novosibirsk, 630090 (SU)
Erfinder: KRAMADZHIAN, Arestakes
Aramovich
ul. Zheleznodorozhnaya, 8/1-329
Novosibirsk, 630104 (SU)
Erfinder: STATIVKO, Nikolai Fedorovich
ul. Dusi Kovalchuck, 18-61
Novosibirsk, 630001 (SU)
Erfinder: DYAKOV, Gennady Nikolaevich
ul. 1905 goda, 87-135
Novosibirsk, 630104 (SU)
Erfinder: LEV, Genrikh Konstantinovich
ul. Leskova, 280-48
Novosibirsk, 630039 (SU)
Erfinder: SHANIN, Vladimir Konstantinovich
ul. Nikitina, 70-122
Novosibirsk, 630063 (SU)
Erfinder: SCHIPKOV, Ruslan Borisovich
ul. Udarnaya, 31-14
Novosibirsk, 660052 (SU)

(74) Vertreter: Nix, Frank Arnold, Dr.
Kröckelbergstrasse 15
W-6200 Wiesbaden (DE)

## Beschreibung

Die Erfindung betrifft die Technik der Dosierung von Schüttgütern, und zwar Einrichtungen zum volumetrischen Dosieren von Schüttgütern und insbesondere von Pulverstoffen.

Es sind verschiedene Typen von volumetrischen Dosiereinrichtungen für Schüttgüter bekannt. Aus SU, A, 598 822 ist beispielsweise eine Dosiereinrichtung bekannt, die einen senkrecht angeordneten Aufnahmebunker, in dessen Unterteil ein Leittrichter befestigt ist, und eine dazwischen angeordnete und um eine senkrechte Achse drehbare Scheibe mit einer Auslauföffnung aufweist. Bei der Drehbewegung der Scheibe wird das Gut über der Auslauföffnung im Bereich des sogenannten Gewölbes sukzessiv aus dem Gleichgewicht gebracht und fällt durch die Auslauföffnung in den Leittrichter.

Ein Nachteil dieser Einrichtung ist eine geringe Dosiergenauigkeit, die dadurch bedingt ist, daß der Gewölbeumfang und folglich die Menge des durch die Auslauföffnung in einer Zeiteinheit durchtretenden Gutes in einem breiten Bereich variieren und vom Zufall abhängen.

Aus SU, A, 401 616 ist eine Dosiereinrichtung bekannt, die einen senkrecht angeordneten Aufnahmebunker, in dessen Gehäuseunterteil eine um eine senkrechte Achse drehbare Scheibe mit einer Auslauföffnung angeordnet ist, und ein Abstreichmesser aufweist, das über der Auslauföffnung und schräg zur Scheibenoberfläche angebracht ist.

Ein Nachteil auch dieser Einrichtung ist eine geringe Dosiergenauigkeit, die dadurch verursacht ist, daß das Abstreichmesser beim Überwinden des Stirnwiderstandes des Schüttgutes dieses verformt, wodurch irreversible und unkontrollierbare Dichteveränderungen hervorgerufen werden. Außerdem wird durch die schräge Fläche des Abstreichmessers ein Nachrutschen des Guts im Bunker über der Auslauföffnung und als Folge davon ein spontanes Herausfallen des Guts verursacht, was ein weiterer Grund für eine geringe Dosiergenauigkeit ist.

Aus der FR-A-1 489 157 ist bekannt eine Dosiereinrichtung für Schüttgüter mit einem senkrecht angeordneten Aufnahmebunker, an dessen unterem Ende an einer senkrechten Welle eine drehbare Bodenscheibe angeordnet ist, die mindestens eine Auslauföffnung aufweist, über welcher eine Abtrennvorrichtung vorgesehen ist, deren Oberfläche parallel zur Oberfläche der Scheibe liegt.

Bei dieser bekannten Ausbildung ist die Bodenscheibe in vier Segmente unterteilt, die in verschiedener Höhe liegen, wobei die in Drehrichtung nachfolgenden höherliegenden Segmente als Abtrennvorrichtungen bezüglich des vorangehenden Segments wirken und die Auslauföffnungen zwischen den benachbarten Rändern der Segmente gebildet sind. Bei dieser Ausbildung ergibt sich ein großer Spalt zwischen den benachbarten Rändern des höchsten und des niedrigsten Segments, was die Gefahr eines unkontrollierten Durchfallens des Dosierguts mit sich bringt und ebenfalls die Dosiergenauigkeit in Frage stellt. Außerdem ist keine Möglichkeit gegeben, die Menge des pro Umdrehung der Bodenscheibe erfaßten Dosiergutes einzustellen und an die Eigenschaften des Gutes anzupassen.

Aufgabe der vorliegenden Erfindung ist es, unter Vermeidung der beschriebenen Nachteile eine Dosiereinrichtung zum volumetrischen Dosieren von Schüttgütern zu schaffen, bei der ein gleichmäßiges Auslaufen des Guts aus dem Aufnahmebunker und eine stabile Dichte des Guts am Austritt aus dem Bunker bei einstellbarer Leistung sichergestellt wird.

Die gestellte Aufgabe wird dadurch gelöst, daß in einer Dosiereinrichtung für Schüttgüter nach dem Oberbegriff des Patentanspruchs 1 erfindungsgemäß die Bodenscheibe und die Ränder der Auslauföffnung in einer gemeinsamen horizontalen Ebene liegen, und die Abtrennvorrichtung in Form einer Platte ausgebildet ist, welche unmittelbar über der Auslauföffnung vertikal und horizontal gegenüber dieser verstellbar angeordnet ist und hierzu an einem mit der Bodenscheibe beweglich verbundenen Tragarm befestigt ist, wobei die Auslauföffnung mindestens teilweise durch die Abtrennvorrichtung überdeckt wird.

Es kann zweckmäßig sein, eine zusätzliche Scheibe mit einer Abtrennvorrichtung über der Bodenscheibe koaxial zu dieser anzuordnen, wobei die Auslauföffnung der zusätzlichen Scheibe duch die Abtrennvorrichtung völlig überdeckt ist.

Bei dieser Ausbildung ist es weiterhin zweckmäßig, wenn die zusätzliche Scheibe auf der Welle verschieblich angeordnet ist. Dadurch kann der Abstand zwischen den beiden Scheiben eingestellt und ein gleichmäßiges Auslaufen des Guts mit einer konstanten Dichte und einer voreingestellten Durchsatzmenge erzielt werden.

Das Wesen der vorliegenden Erfindung besteht darin, daß durch die in Form einer parallel zur Scheibenoberfläche liegenden Platten ausgebildete Abtrennvorrichtung bei ihrer gemeinsamen Drehbewegung mit der Scheibe von der unbeweglichen Schüttgutmasse im Bunker eine Schicht konstanter Höhe kontinuierlich abgelöst wird, die dem Abstand der Fläche der Abtrennvorrichtung von der Scheibenoberfläche entspricht, und diese Schicht fällt nur unter der Wirkung des Eigengewichts durch die Auslauföffnung gleichmäßig in den Leittrichter. Dabei ist eine Krafteinwirkung der Abtrennvorrichtung auf das Gut ausgeschlossen, sodaß keine räumliche Verformung des Guts und keine damit verbundenen Dichteschwankungen auftreten.

Wegen der Befestigung der Abtrennvorrichtung an einem mit der Scheibe beweglich verbundenen Tragarm kann durch eine Änderung der Anordnungshöhe der Abtrennvorrichtung über der Scheibe die Dosierleistung eingestellt werden.

Dadurch, daß die Abtrennvorrichtung mit der Möglichkeit einer horizontalen Verstellung ausgeführt ist, kann ein spontanes Auslaufen des Guts aus dem Bunker verhindert werden.

Bei der Ausbildung der Einrichtung mit einer zusätzlichen Scheibe mit Abtrennvorrichtung, die koaxial über der Bodenscheibe liegt, kann eine stabile Gutdichte über der Bodenscheibe unabhängig von der Höhe der Gutsäule im Bunker aufrechterhalten werden.

Durch die verschiebliche Befestigung der zusätzlichen Scheibe an der Welle wird eine eventuelle Drehbwegung des Guts über der Bodenscheibe relativ zu den Wänden des Aufnahmebunkers verhindert.

Durch den Einsatz der Erfindung wird die Genauigkeit der volumetrischen Dosierung von Pulverstoffen in Abhängigkeit von ihrer Art und Homogenität mit einer Wahrscheinlichkeit von ± 0,4 bis ± 0,6% erhöht.

Kurze Beschreibung der Zeichnungen

Nachstehend wird eine konkrete Ausführungsvariante der vorliegenden Erfindung unter Bezungnahme auf die Zeichungen angeführt ; es zeigt :

    Fig. 1 – eine erfindungsgemässe Dosiereinrichtung für Schüttgüter, im Axialschnitt ;
    Fig. 2 – den Schnitt nach der Linie II-II in Fig. 1 ;
    Fig. 3 – eine der Ausführungsvarianten der Dosiereinheit ;
    Fig. 4 – eine andere Ausführungsvariante der Dosiereinheit.

Die bevorzugte Ausführungsvariante der Erfindung

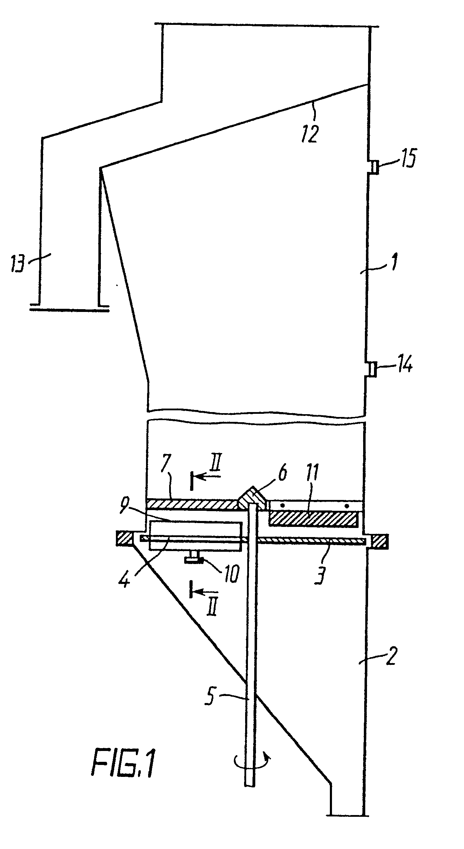

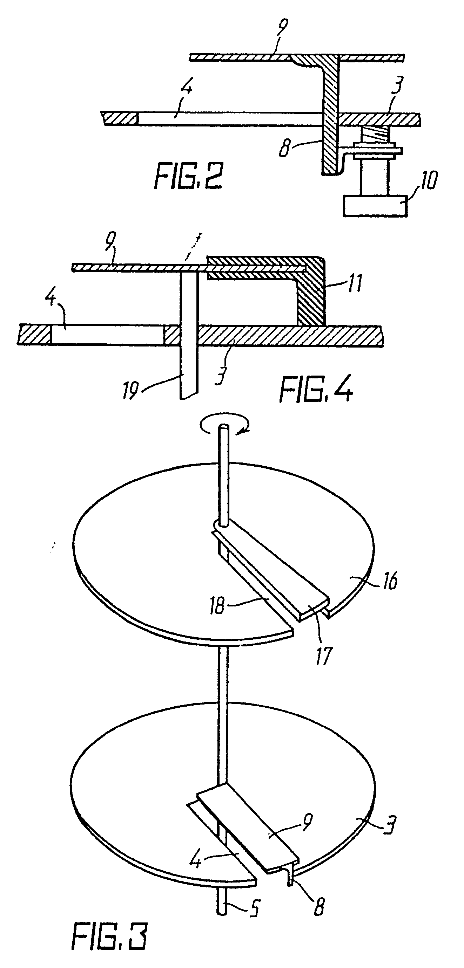

Die Dosiereinrichtung für Schüttgüter (Fig. 1) enthält einen Aufnahmebunker 1, an dessen unterem Ende ein Leittrichter 2 befestigt ist. Zwischen diesen ist eine Scheibe 3 mit mindestens einer Auslauföffnung 4 koaxial mit dem Bunter 1 angeordnet, die an einer Welle 5 befestigt ist, deren oberes Ende in einer Lagerung 6 drehbar angeordnet ist, die mittels Rippen 7 festgehalten wird, und deren unteres Ende mit einem Antrieb (in Fig. nicht gezeigt) verbunden ist. Über der Auslauföffnung 4 (Fig. 2) ist parallel zur Scheibe 3 eine in Führungsnuten eines Tragarms 9 horizontal verstellbare Abtrennvorrichtung 8 angeordnet, die in Form einer Platte ausgebildet ist. Mit einer Spindel 10 kann die Abtrennvorrichtung 9 senkrecht verstellt werden. An der Rippe 7 (Fig. 1) ist ein Wischer 11 aus einem elastischen Material für die Abtrennvorrichtung 9 befestigt. Auf dem Eintrittsabschnitt des Aufnahmebunkers 1 sind ein Gitter 12 zum Abtrennen von Fremdeinschlüssen vom Dosiergut und eine damit kommunizierende Fangvorrichtung 13 für die Fremdeinschlüsse vorgesehen. Das Gitter 12 stellt einen Rahmen mit parallel gespannten Saiten dar. Auf dem Gehäuse des Aufnahmebunkers 1 sind Tief- und Hochniveaugeber 14, 15 angebracht.

In Fig. 3 ist eine Dosiereinheit dargestellt, die eine zusätzliche Scheibe 16 mit einer eine Auslauföffnung 18 völlig überdeckenden Abtrennvorrichtung 17 enthält, die über der Hauptscheibe 3 auf ihrer Welle 5 sitzen. Die zusätzliche Scheibe 16 und die Abtrennvorrichtung 17 können in der vorgegebenen Stellung auf der Welle 5 auf eine beliebige bekannte Weise festgestellt werden.

In Fig. 4 ist eine andere Variante der Dosiereinheit dargestellt., die eine Abtrennvorrichtung 9 enthält, die in Form einer scheibenförmigen Platte ausgebildet und an einer senkrechten Welle 19 über der Auslauföffnung 4 der Scheibe 3 befestigt ist. Der Wischer 11 für die Abtrennvorrichtung 9 ist in der Scheibe 3 ausserhalb des Bereichs der Auslauföffnung 4 befestigt und in Form einer Gabel ausgebildet, die die obere und die untere Fläche der Abtrennvorrichtung 9 berührt.

Die in Fig. 1 und 2 dargestellte Einrichtung funktioniert folgenderweise. Das Schüttgut wird auf das Gitter 12 aufgegeben, geht durch seine Saiten, fällt unter der Eigenschwere auf die Oberfläche der Scheibe 3, une füllt den Aufnahmebunker 1. Die Fremdeinschlüsse, die das Gut enthalten kann und deren Grösse den Abstand zwischen den Saiten des Gitters 12 überschreitet, rollen über seine geneigte Oberfläche in die Fangvorrichtung 13.

Bei unbeweglicher Scheibe 3 läuft das Gut aus dem Aufnahmebunker 1 nicht aus, weil der Abstand der Schneidkante der Abtrennvorrichtung 9 und des Randes der Auslauföffnung 4 voneinander die Grösse der maximalen gewöl bebildenden Öffnung im Schüttgut nicht überschreitet. Dieser Abstand wird durch die horizontale Verstellung der Abtrennvorrichtung 9 in den Führungsnuten des Tragarms 8 voreingestellt. Bei der Drehung der Scheibe 3 bleibt das darüber liegende Schüttgut unbeweglich ; es wird durch die im Gut wirkenden inneren Reibungskräfte, die äusseren Reibungskräfte zwischen dem Gut un den Wänden des Aufnahmebunkers 1 und den Widerstand der Rippen 7 gehalten. Im Ergebnis wird durch die Abtrennvorrichtung 9, die zusammen mit der Scheibe 3 rotiert, von der unbeweglichen Gutmasse in Aufnahmebunker 1 eine Schicht abgeschnitten und abgelöst, deren Dicke dem Abstand der Abtrennvorrichtung 9 un der Oberfläche der Scheibe 3 voneinander gleich ist. Diese Gutschicht gelangt unter die Abtrennvorrichtung 9, die den Druck der obenliegenden Masse aufnimmt und dadurch die Schicht entlastet. Die Dosiergutschicht tritt nur unter der Eigenschwere zuerst in die Auslauföffnung 4 und dann in den Leittrichter 2 ein. Der Staudruck des Guts in der sich bewegenden Schicht wird bei der Drehung der Scheibe 3 durch den Tragarm 8 dank der Vorwahl des Abstandes des letzteren und der Schneidkante der Abtrennvorrichtung 9 voneinander beseitigt.

Bei der Rotation der Scheibe 3 läuft die Auslauföffnung 4 auf dem Umfang des Aufnahmebunkers 1, wobei pro eine Umdrehung von der Schüttgutmasse eine Schicht von einer konstanten Höhe abgetrennt wird. Das aus dem Aufnahmebunker 1 ausgelaufene Gut wird durch das obenliegende Gut ersetzt, das unter der Eigenschwere auf die Scheibe 3 frei absinkt.

Zur Stabilisierung der Gutdichte unmittelbar über der Scheibe 3 soll die Höbe des Dosierguts im Aufnahmebunker 1 im vorgegebenen Bereich gehalten werden, was mit Hilfe der Geber 14 und 15 erreicht wird.

Um eventuelle Schwankungen der Gutdichte über der Scheibe 3 auszuschliessen, die mit der periodischen Höhenänderungen der Gutsäule über dieser vom oberen bis zum unteren Niveau verbunden sind, ist es zweckmässig, eine zusätzliche Scheibe 16 mit einer Abtrennvorrichtung 17 (Fig. 3) in die Konstruktion der Dosiereinheit einzufürhgren. Im diesem Fall wird durch das Auslaufen des Guts über die Auslauföffnung 4 aus dem durch die zusätzliche Scheibe 16 begrenzten Unterteil des Aufnahmebunkers 1 ein kontinuierlicher Zulauf des Guts in diese Zone aus dem oberen Teil des Aufnahmebunkers 1 über die Auslauföffnung 18 ausgelöst. Bei einem etwas (um 5 bis 10%) grösseren Abstand zwichen der zusätzlichen Scheibe 16 und der Abtrennvorrichtung 17 als der Abstand zwischen der Hauptscheibe 3 und der Abtrennvorrichtung 9 (dieser Abstand wird durch die senkrechte Verstellung der Abtrennvorrichtung 17 auf der Welle 5 voreingestellt) wird das aus dem Unterteil des Aufnahmebunkers 1 auslaufende Gut durch das von oben zulaufende Gut völlig ersetzt. Das überschüssige Gut rutscht dabei unbehindert unter der Abtrennvorrichtung 17. Im Ergebnis wird die Höhe der auf der Scheibe 3 aufliegenden Schüttgutsäule auf dem Niveau der zusätzlichen Scheibe 16 stabil aufrechterhalten. Dabei wird das Gut in dieser Zone keinen Einwirkungen seitens des darüber im oberen Teil des Aufnahmebunkers 1 liegenden Gutes ausgesetzt, weil der Druck des letzteren von der zusätzlichen Scheibe 16 und der Abtrennvorrichtung 17 aufgenommen wird. Eine eventuelle Drehbewegung des Schüttguts über der Scheibe 3 relativ zu den Wänden des Aufnahmebunkers 1 wird durch die Vorwahl des Abstandes der Scheibe 3 und der zusätzlichen Scheibe 16 voneinander (dieser Abstand wird durch die senkrechte Verstellung der zusätzlichen Scheibe 16 auf der Welle 5 voreingestellt) verhindert.

Fadenförmige mechanische Verunreinigungen, die im Gut vorkommen und auf der Schneidkante der Abtrennvorrichtung hängenbleiben können, werden mit dem Wischer 11 (Fig. 1) periodisch entfernt. Um eine periodische Überdeckung der Auslauföffnung 4 durch die Abtrennvorrichtung 9 auszuschliessen und die Reinigung der Unterfläche der Abtrennvorrichtung von feindispersen Einschlüssen zu ermöglichen, ist es in einer Reihe von Fällen zweckmässig, die Abtrennvorrichtung 9 in Form einer auf der senkrechten Well 19 über der Auslauföffnung 4 angeordneten scheibenförmigen Platte (Fig. 4) und dem Wischer 11 entsprechend in Form einer Gabel auszubilden, die die Abtrennvorrichtung 9 auf dem Radius umfasst und ausserhalb des Bereichs der Auslauföffnung 4 angebracht ist.

Die Leistung einer derartigen Dosiereinrichtung ist proportional mit dem Abstand der Abtrennvorrichtung 9 und der Oberfläche der Scheibe 3 voneinander und der Drehgeschwindigkeit der letzteren. Sie kann durch die senkrechte Verstellung der Abtrennvorrichtung 9 oder durch die Änderung der Drehgeschwindigkeit der Scheibe 3 geregelt werden.

Industrielle Anwendbarkeit

Die vorliegende Erfindung kann in der Brotindustrie für die dosierte Zuführung in Teigknetmaschinen besonders wirksam eingesetzt werden, wodurch die Qualität der Fertigprodukte verbessert und Rohstoffe eingespart werden.

**Ansprüche**

1. Dosiereinrichtung für Schüttgüter mit einem senkrecht angeordneten Aufnahmebunker (1),

an dessen unterem Ende an einer senkrechten Welle (5) eine drehbare Bodenscheibe (3) angeordnet ist,

die mindestens eine Auslauföffnung (4) aufweist, über welcher eine Abtrennvorrichtung (9) vorgesehen ist, deren Oberfläche parallel zur Oberfläche der Scheibe liegt, dadurch gekennzeichnet, daß die Bodenscheibe (3) und die Ränder der Auslauföffnung (4) in einer gemeinsamen horizontalen Ebene liegen,

und daß die Abtrennvorrichtung (9) in Form einer Platte ausgebildet ist, welche unmittelbar über der Auslauföffnung (4) vertikal und horizontal gegenüber dieser verstellbar angeordnet ist und hierzu an einem mit der Bodenscheibe (3) beweglich verbundenen Tragarm (8) befestigt ist,

wobei die Auslauföffnung (4) mindestens teilweise durch die Abtrennvorrichtung (9) überdeckt wird.

2. Dosiereinrichtung nach Anspruch 1, gekennzeichnet durch eine zusätzliche Scheibe (16) mit einer zweiten Abtrennvorrichtung (17), die über der Bodenscheibe (3) und koaxial zu dieser angeordnet ist,

wobei die Auslauföffnung (18) der zusätzlichen Scheibe (16) durch die zweite Abtrennvorrichtung (17) völlig überdeckt ist.

3. Dosiereinrichtung nach Anspruch 2, dadurch gekennzeichnet, daß die zusätzliche Scheibe (16) auf der Welle (5) verschieblich sitzt.

4. Dosiereinrichtung nach einem der Ansprüche 1 bis 3, gekennzeichnet durch einen an den Unterteil des Aufnahmebunkers (1) anschließenden Leittrichter (2).

## Claims

1. Dosing apparatus for loose materials, having a perpendicularly-arranged receiving bunker (1), at the lower end of which there is arranged, on a perpendicular shaft (5), a rotatable floor disc (3) which has at least one discharging hole (4), above which there is provided a separating device (9), the upper surface of which lies parallel to the upper surface of the disc, **characterised in that** the floor disc (3) and the edges of the discharging hole (4) lie in a common horizontal plane, and in that the separating device (9) is constructed in the form of a plate which is arranged in adjustable manner directly above the discharging hole (4), vertically and horizontally opposite this hole, and which, for this purpose, is attached to a supporting arm (8) movably connected to the floor disc (3), the discharging hole (4) being at least partly covered by the separating device (9).

2. Dosing apparatus according to claim 1, **characterised by** an additional disc (16) having a second separating device (17) which is arranged above the floor disc (3) and coaxial therewith, the discharging hole (18) of the additional disc (16) being completely covered by the second separating device (17).

3. Dosing apparatus according to claim 2, **characterised in that** the additional disc (16) sits on the shaft (5) in a displaceable manner.

4. Dosing apparatus according to one of claims 1 to 3, **characterised by** a guiding hopper (2) attached to the underpart of the receiving bunker (1).

## Revendications

1. Dispositif de dosage pour des matières en vrac, comprenant une trémie de réception (1) verticale, à l'extrémité inférieure de laquelle il est disposé sur un arbre (5) vertical un disque de fond (3) rotatif qui présente au moins une ouverture d'écoulement (4), au-dessus de laquelle il est prévu un dispositif de séparation (9) et dont la surface est parallèle à la surface du disque, caractérisé par le fait que le disque de fond (3) et les bords de l'ouverture d'écoulement (4) se trouvent dans un même plan horizontal, et que le dispositif de séparation (9) est réalisé sous la forme d'une plaque qui est disposée directement au-dessus de l'ouverture d'écoulement (4), de manière réglable verticalement et horizontalement par rapport à cette ouverture, et est fixée à cet effet sur un bras support (8) relié de façon mobile au disque de fond (3), l'ouverture d'écoulement (4) étant recouverte au moins partiellement par le dispositif de séparation (9).

2. Dispositif selon la revendication 1, caractérisé par un disque (16) supplémentaire qui comprend un deuxième dispositif de séparation (17) coaxial avec le disque de fond (3) et disposé au-dessus de celui-ci, l'ouverture d'écoulement (18) du disque (16) supplémentaire étant entièrement recouverte par le deuxième dispositif de séparation (17).

3. Dispositif selon la revendication 2, caractérisé par le fait que le disque (16) supplémentaire peut être déplacé sur l'arbre (5).

4. Dispositif selon l'une des revendications 1 à 3, caractérisé par un entonnoir débiteur (2) se raccordant à la partie inférieure de la trémie de réception (1).

FIG.1

FIG. 2

FIG. 4

FIG. 3